# FASCICULE DE BREVET EUROPEEN

(11) **EP 4 240 943 B1**
(45) Date de publication et mention de la délivrance du brevet: **28.08.2024**
(21) Numéro de dépôt: 21815566.1
(22) Date de dépôt: 04.11.2021
(51) Int. Cl.: F01D 25/24, F01D 11/12

(54) **ENSEMBLE D'ANNEAU DE TURBINE AMELIORE**
VERBESSERTE TURBINENRINGEINHEIT
IMPROVED TURBINE RING ASSEMBLY

(30) Priorité: 05.11.2020 FR 2011386
(43) Date de publication de la demande: 13.09.2023
(73) Titulaire: SAFRAN AIRCRAFT ENGINES, 75015 Paris (FR)
(72) Inventeur: CAZIN, Clément, Emile, André, 77550 MOISSY-CRAMAYEL (FR); TABARIN, Pascal, Cédric, 77550 MOISSY-CRAMAYEL (FR); CONGRATEL, Sébastien, Serge, Francis, 77550 MOISSY-CRAMAYEL (FR); TABLEAU, Nicolas, Paul, 77550 MOISSY-CRAMAYEL (FR)
(74) Mandataire: Cabinet Beau de Loménie
(86) Numéro de dépôt international: PCT/FR2021/051943
(87) Numéro de publication internationale: WO 2022/096828

(56) Documents cités:
- EP-A1- 1 593 813
- EP-A1- 3 061 924
- FR-A1- 3 055 146
- FR-A1- 3 056 636
- FR-A1- 3 076 578

## Description

### Domaine technique

Le présent exposé concerne un ensemble d'anneau de turbine pour une turbomachine dans lequel l'ensemble d'anneau turbine comprend une pluralité de secteurs angulaires mis bout à bout circonférentiellement pour former un anneau de turbine en matériau composite à matrice céramique.

L'invention s'applique notamment aux moteurs aéronautiques à turbines à gaz, voire à d'autres turbomachines telles que des turbines industrielles.

### Technique antérieure

Dans les moteurs aéronautiques à turbines à gaz il est connu de réaliser des secteurs angulaires d'ensemble d'anneau de turbine en matériau composite à matrice céramique (CMC) à la place d'un matériau métallique, notamment d'un alliage métallique. Ceci est rendu possible par le fait que le matériau CMC possède des caractéristiques mécaniques qui le rendent davantage apte à former des pièces de structure soumises à des températures élevées que les matériaux métalliques qui nécessitent des flux d'air de refroidissement particulièrement élevés. L'utilisation d'un matériau CMC permet ainsi de réduire le débit du flux d'air de refroidissement qui est généralement prélevé sur le moteur et donc d'améliorer les performances de la turbomachine.

On connaît notamment des brevets FR3056636, FR3055146 et FR3076578 des ensembles d'anneau de turbine pour turbomachine utilisant un matériau CMC.

Bien que ces ensembles d'anneau de turbine soient satisfaisants il existe néanmoins un besoin d'améliorer leur structure.

### Exposé de l'invention

L'invention a ainsi pour objet un ensemble d'anneau de turbine s'étendant autour d'un axe longitudinal suivant lequel un fluide est destiné à s'écouler d'amont en aval, l'ensemble d'anneau de turbine comprenant:
- une pluralité de secteurs angulaires d'anneau en matériau composite à matrice céramique disposés circonférentiellement de manière à former un anneau de turbine, chaque secteur angulaire d'anneau comprenant une base à partir de laquelle s'étendent radialement, en éloignement de l'axe longitudinal, une patte amont et une patte aval espacées axialement l'une de l'autre,
- une structure de support d'anneau qui comprend :
   une entretoise s'étendant circonférentiellement autour de la pluralité de secteurs angulaires d'anneau et comportant une ou plusieurs brides aval de manière à ce que la patte aval de chaque secteur angulaire d'anneau soit maintenue contre la bride aval ou une des brides aval de l'entretoise, un flasque amont de reprise d'efforts s'étendant circonférentiellement autour de l'axe longitudinal et radialement relativement à cet axe de manière à être simultanément, d'une part, en appui contre la patte amont de chaque secteur angulaire d'anneau et, d'autre part, fixé à une zone amont de l'entretoise qui est disposée radialement au droit de la patte amont de chaque secteur angulaire d'anneau, de manière extérieure à la patte amont relativement à l'axe longitudinal, caractérisé en ce que l'ensemble d'anneau de turbine comprend en outre,
   un diffuseur d'air aménagé entre l'entretoise et chaque secteur angulaire d'anneau, le diffuseur d'air comportant une paroi amont fixée entre le flasque amont de reprise d'efforts et la zone amont de l'entretoise.

Cette configuration d'ensemble d'anneau de turbine permet de maîtriser le positionnement axial de la pluralité de secteurs angulaires d'anneau et notamment d'améliorer le rattrapage des tolérances de dimensions axiales des secteurs angulaires. L'ensemble d'anneau de turbine est maintenu directement sur le carter de turbine par l'intermédiaire de la structure de support d'anneau précitée, par exemple, via des crochets amont et aval. La nouvelle configuration d'ensemble d'anneau de turbine comporte également un nombre de pièces réduit par rapport à l'art antérieur (notamment un flasque amont de reprise d'effort unique), ce qui réduit le nombre d'opérations pour la mise en place de cet ensemble et facilite donc cette mise en place. Le poids de l'ensemble s'en trouve également réduit. Le diffuseur d'air de l'ensemble d'anneau de turbine est par ailleurs maintenu en position axiale par sa paroi amont disposée (pincée) entre le flasque amont de reprise d'efforts et la zone amont de l'entretoise.

Selon d'autres caractéristiques possibles :
- une pluralité d'organes de bridage sont répartis circonférentiellement entre le flasque amont de reprise d'efforts et la zone amont de l'entretoise de manière à réaliser un pré-serrage du flasque amont de reprise d'efforts sur la zone amont de l'entretoise ;
- des organes de maintien amont relient la patte amont de chaque secteur angulaire d'anneau et le flasque amont de reprise d'efforts ;
- des organes de maintien aval relient la patte aval de chaque secteur angulaire d'anneau et la ou les brides aval de l'entretoise;
- le flasque amont de reprise d'efforts comprend une première partie de flasque qui est radialement interne et une deuxième partie de flasque qui est radialement externe et s'étend radialement en éloignement de la première partie de flasque relativement à l'axe longitudinal, la première partie de flasque étant en contact avec la patte amont de chaque secteur angulaire d'anneau et étant épaissie axialement par rapport à la deuxième partie de flasque qui est fixée à la zone amont de l'entretoise ;
- la deuxième partie de flasque est épaissie axialement par rapport à la ou à chaque bride aval de l'entretoise ;
- l'entretoise comprend un crochet amont et un crochet aval espacés axialement l'un de l'autre et ayant chacun une même orientation dirigée vers l'amont ou vers l'aval, chaque crochet étant destiné à coopérer avec un crochet correspondant d'orientation inverse d'un carter de turbine pour l'accrochage de l'entretoise sur ce dernier ;
- les crochets amont et aval de l'entretoise sont orientés vers l'aval;
- l'entretoise comprend une zone aval comportant la ou les brides aval et qui est disposée en porte-à-faux radialement vers l'intérieur en direction de l'axe longitudinal à partir du crochet aval de l'entretoise;
- la ou les brides aval de l'entretoise s'étendent radialement à partir d'une base de la ou des brides aval en direction de la pluralité de secteurs angulaires d'anneau et l'entretoise comporte une partie qui s'étend axialement de la base de la ou des brides aval vers la zone amont de l'entretoise avec une dimension radiale qui augmente en direction de cette zone amont, de manière à conférer à cette partie de l'entretoise une forme générale triangulaire en section axiale ;
- la partie d'entretoise de forme générale triangulaire comprend plusieurs tronçons successifs successifs disposés circonférentiellement de manière adjacente l'un par rapport à l'autre;
- le diffuseur d'air comporte une paroi disposée en vis-à-vis du secteur angulaire d'anneau (à refroidir) et percée d'une pluralité de trous traversants pour le passage d'air de refroidissement et pour la distribution d'un flux d'air de refroidissement (radial, notamment dirigé de l'extérieur vers l'intérieur de l'ensemble d'anneau) sur le secteur angulaire en vis-à-vis; le diffuseur d'air peut comprendre, disposée radialement autour de la paroi percée d'une pluralité de trous traversants, une cavité alimentée en air de refroidissement; la paroi percée d'une pluralité de trous traversants est disposée sensiblement radialement et s'étend circonférentiellement autour et en regard d'une face externe du secteur angulaire en vis-à-vis et de manière parallèle à cette face externe afin que le flux d'air de refroidissement issu des trous traversants débouche directement sur cette face ;
- la paroi du diffuseur percée d'une pluralité de trous traversants est disposée à une distance suffisamment proche du secteur angulaire d'anneau en vis-à-vis, notamment de sa face externe, de manière à minimiser le gradient de température sur le secteur angulaire en vis-à-vis ;
- le diffuseur d'air est aménagé dans un espace interne qui est délimité, d'une part, par l'entretoise et, d'autre part, par chaque secteur angulaire d'anneau, le diffuseur d'air présentant une forme générale, notamment triangulaire, adaptée pour être introduite dans l'espace interne.

L'invention a également pour objet une turbomachine comprenant un ensemble d'anneau de turbine tel que brièvement exposé ci-dessus.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue générale schématique partielle suivant une section axiale en perspective d'un ensemble d'anneau de turbine selon un mode de réalisation de l'invention ;
[Fig. 2] La figure 2 est une vue schématique éclatée en perspective par l'arrière (aval) de l'ensemble d'anneau de turbine de la figure 1;
[Fig. 3] La figure 3 est une vue schématique partielle dans un plan transversal de la face amont de l'ensemble d'anneau de turbine de la figure 1 sans le flasque de reprise d'efforts (vue suivant A de la figure 1) ;
[Fig. 4] La figure 4 est une vue schématique en section axiale de l'ensemble d'anneau de turbine de la figure 1 suivant le plan de coupe IV de la figure 3 ;
[Fig. 5] La figure 5 est une vue schématique en perspective par l'avant (amont) du secteur angulaire d'entretoise de l'ensemble d'anneau de turbine de la figure 1.

### Description détaillée

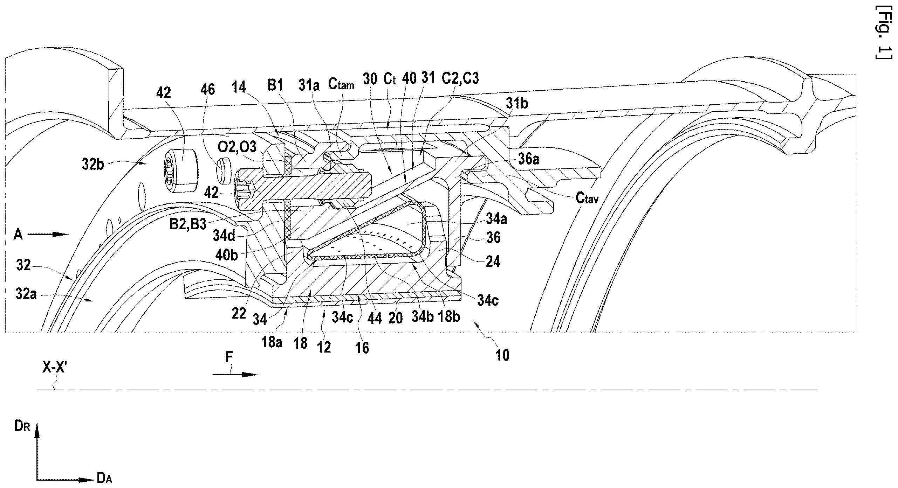

Comme représenté aux figures 1 à 5 et désigné par la référence générale notée 10, un ensemble d'anneau de turbine pour turbomachine (dans un aéronef) selon un mode de réalisation de l'invention va maintenant être décrit. Cet ensemble 10 s'étend autour d'un axe longitudinal X-X' suivant lequel un fluide gazeux est destiné à s'écouler à l'intérieur de l'ensemble d'anneau de turbine.

Les termes « amont » et « aval » sont utilisés ici en référence au sens d'écoulement du flux gazeux suivant l'axe X-X', à l'intérieur de l'ensemble d'anneau de turbine, représenté par la flèche F sur la figure 1.

Sur la figure 1, la flèche D_{A} indique la direction axiale de l'ensemble d'anneau de turbine 10, tandis que la flèche D_{R} indique sa direction radiale. Pour des raisons de simplification de la représentation, les figures 1 à 5 sont des vues partielles de cet ensemble qui, en réalité, est annulaire.

Cet ensemble 10 comprend notamment un anneau de turbine 12 en matériau composite à matrice céramique (CMC), centré sur l'axe longitudinal X-X' et une structure métallique de support d'anneau 14 entourant radialement l'anneau de turbine 12 en s'étendant circonférentiellement autour de cet anneau.

L'anneau de turbine 12 entoure un ensemble d'aubes de turbine connu en soi et non représenté sur les figures.

Dans la suite de la description, la turbine décrite ici est une turbine haute pression. Toutefois, l'invention peut s'appliquer également à une turbine basse pression.

L'anneau de turbine 12 est formé d'une pluralité de secteurs angulaires d'anneau 16, qui sont disposés bout à bout circonférentiellement pour former conjointement un anneau complet. Les secteurs sont notamment liés entre eux mécaniquement par des éléments de liaison tels que des pions axiaux qui seront décrits plus loin.

Chaque secteur angulaire d'anneau 16 présente une section axiale (fig. 1) sensiblement en forme de lettre grecque Pi (ou Π) inversé, avec une base 18, présentant une face interne 18a orientée vers l'axe X-X', qui définit une portion angulaire de la face interne de l'anneau de turbine 12 et une face externe 18b, opposée à la face interne 18a, orientée en éloignement de l'axe X-X' et qui définit une portion angulaire de la face externe de l'anneau turbine 12. La face interne 18a est par exemple munie d'une couche de revêtement abradable 20 qui fait également office de barrière thermique et environnementale.

Une patte amont 22 et une patte aval 24 s'étendent radialement à partir de chaque portion angulaire de la face externe 18b de chaque secteur angulaire d'anneau de turbine en éloignement de l'axe X-X', c'est-à-dire vers l'extérieur de l'anneau de turbine 12. Ces pattes sont espacées axialement l'une de l'autre suivant la direction D_{A} d'une distance qui correspond à la quasi-totalité de la largeur (dimension axiale suivant l'axe X-X') du secteur angulaire d'anneau. Par ailleurs, chacune des deux pattes 22, 24 de chaque secteur angulaire d'anneau 16 s'étend de manière circonférentielle (dans un plan transversal perpendiculaire à l'axe X-X') sur toute la longueur (arc) du secteur angulaire concerné avec une extension radiale ou hauteur (suivant la direction D_{R}) qui varie suivant cette longueur en fonction de la présence d'organe(s) d'assemblage disposé(s) axialement relativement au secteur angulaire d'anneau concerné.

La structure de support d'anneau 14 est réalisée par l'assemblage d'une pluralité de pièces distinctes (c'est-à-dire indépendantes) les unes des autres.

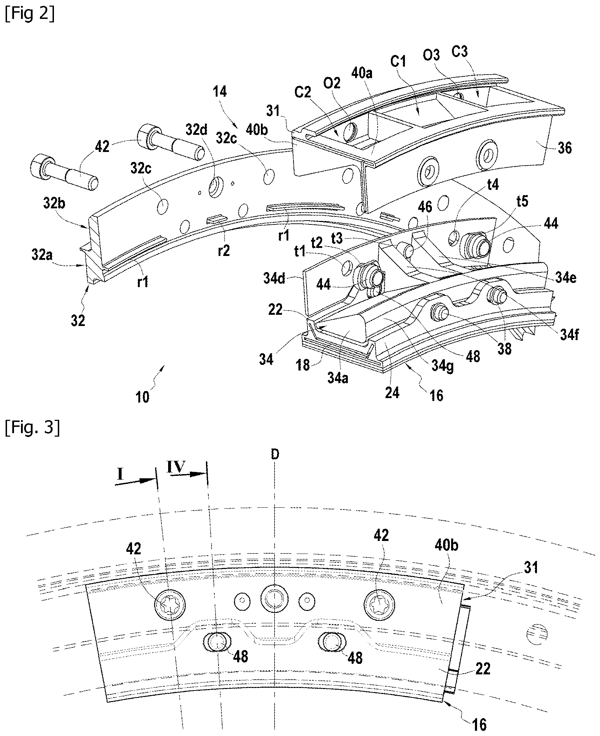

Plus particulièrement, comme illustré sur les figures 1 et 2, la structure de support d'anneau 14 comprend une entretoise 30, un flasque amont de reprise d'efforts 32 et un diffuseur d'air 34.

L'entretoise 30 peut être réalisée par un assemblage d'une pluralité de secteurs angulaires d'entretoise 31 mis bout à bout de manière circonférentielle, comme dans le présent mode de réalisation (cette configuration s'avère relativement facile à monter), ou être formée d'une seule pièce de révolution (c'est-à-dire s'étendre sur 360°).

De manière générale, l'entretoise 30 s'étend circonférentiellement autour de la pluralité de secteurs angulaires d'anneau 16 et comporte une ou plusieurs brides aval de manière à ce que la patte aval 24 de chaque secteur angulaire d'anneau 16 soit maintenue contre la bride aval ou une des brides aval de l'entretoise. Dans le présent mode, chaque secteur angulaire d'entretoise 31 comporte une bride aval 36 qui s'étend radialement en direction du secteur angulaire d'anneau en vis-à-vis 16 (en direction de l'axe X-X') et qui s'étend parallèlement à la patte aval 24, contre celle-ci. La patte aval 24 est maintenue contre la bride aval 36 par l'intermédiaire d'organes de maintien tels que des pions axiaux aval 38 (figs. 1, 2 et 4) qui sont disposés au droit de portions locales de la patte aval 24 qui ont une extension radiale augmentée (fig. 2), par exemple à la manière de créneaux (ce profil découpé, i.e. non rectiligne, du bord supérieur de la patte aval 24 permet de limiter le poids de la pièce). La bride aval 36 présente, quant à elle, ici une même extension radiale suivant sa longueur (en arc de cercle) afin d'avoir un contact continu avec l'anneau dans le but de maintenir une étanchéité radiale. La bride aval 36 est relativement mince par rapport au reste de la structure d'entretoise et présente ainsi une certaine souplesse qui lui permet d'absorber certains efforts transmis à l'entretoise. Pour le maintien de chaque patte aval 24 contre chaque bride aval 36 on dénombre par exemple deux pions axiaux 38 (fig. 2) et l'ensemble des pions axiaux sont régulièrement répartis autour de l'axe longitudinal X-X' pour l'ensemble des secteurs angulaires d'anneau et d'entretoise assemblés bout à bout circonférentiellement. Le nombre de pions axiaux par couple patte aval-bride aval peut bien entendu varier.

Comme représenté sur les figures 1, 2 et 4, la bride aval 36 de chaque secteur d'entretoise 31 s'étend radialement en direction du secteur angulaire d'anneau en vis-à-vis 16 à partir d'une base 36a. Le secteur d'entretoise 31 comporte une partie 40 qui s'étend axialement (suivant la direction D_{A}), à partir d'une extrémité aval 40a définissant une zone aval de l'entretoise, située au niveau de la base 36a de la bride aval 36, vers son extrémité opposée amont 40b définissant la zone amont de l'entretoise, en augmentant sa dimension radiale. De manière générale, la zone aval 40a de l'entretoise qui comporte la bride aval 36 est disposée en porte-à-faux radialement vers l'intérieur (en direction de l'axe X-X') à partir de la base 36a.

La partie 40 présente ici en section axiale une forme générale triangulaire. L'extrémité amont 40b s'étend radialement en direction de la patte amont 22 du secteur angulaire d'anneau 16 (l'extrémité amont 40b est disposée au droit de la patte amont 22 et de manière extrérieure à celle-ci relativement à l'axe X-X') et présente ici, en section transversale (vue de face de la figure 3), un bord inférieur libre découpé de manière à s'emboîter avec le profil localement crénelé du bord supérieur libre de la patte amont 22.

Comme représenté sur la figure 2, la partie 40 du secteur d'entretoise 31 comprend plusieurs tronçons disposés successivement l'un à côté de l'autre de manière circonférentielle qui définissent différentes zones fonctionnelles adjacentes évidées (pour alléger la structure) de l'entretoise formant des caissons partiellement fermés, par exemple trois caissons C1, C2, C3 (le nombre de caissons pourrait toutefois différer dans un autre mode de réalisation), illustrés sur les figures 1, 2, 4 et 5.

Les caissons C2 et C3 sont symétriques l'un de l'autre par rapport au caisson central C1 et la section axiale de la figure 1 illustre les deux caissons C2-3. Le caisson central C1 est, quant à lui, visible sur les figures 2, 4 et 5.

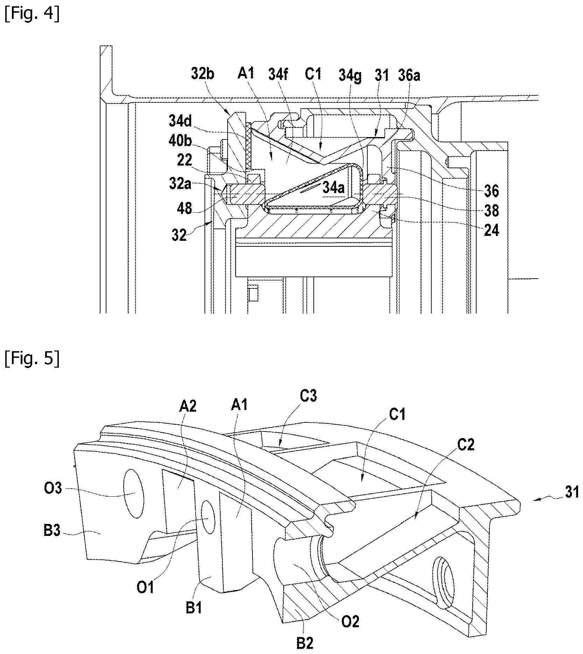

Le caisson central C1 présente en perspective arrière (aval) de dessus (fig. 2) un creux formé par deux parois inclinées l'une vers l'autre et en perspective avant (fig. 5) deux évidements axiaux A1, A2 (A1 est visible sur la figure 4) de part et d'autre d'un bloc central B1 (visible sur la figure 1) percé d'un orifice o1 en face avant (visible sur la figure 5), les éléments A1, A2 et B1 étant disposés en-dessous du creux de la figure 2 (fig. 4 pour l'évidement A1).

Les caissons C2 et C3 sont ouverts par le dessus, comme illustré sur les figures 2 et 5, et présentent chacun une forme sensiblement triangulaire en section axiale (fig. 1). Suivant la vue en perspective avant (amont) de la figure 5, les caissons C2 et C3 comprennent respectivement les blocs B2, B3 percés chacun d'un orifice o2, o3 en face avant.

On notera que la configuration compartimentée en caissons du secteur d'entretoise 31 peut varier sans sortir du cadre de la présente invention.

Chaque secteur d'entretoise 31 (fig. 1) peut comprendre, d'une part, un crochet amont 31a qui est destiné à s'engager dans un crochet amont correspondant Ctam d'un carter de turbine Ct et, d'autre part, un crochet aval 31b qui est destiné à s'engager dans un crochet aval correspondant Ctav du carter de turbine afin de permettre le montage de la structure de support d'anneau 14 directement sur le carter de turbine et son maintien en position. Les deux crochets amont et aval du carter de turbine sont par exemple orientés vers l'amont et les deux crochets amont et aval de chaque secteur d'entretoise 31 sont orientés en sens contraire, c'est-à-dire ici vers l'aval. Cet agencement facilite le montage de l'entretoise directement sur le carter de turbine et ne nécessite pas de carter de support d'anneau pour le montage de l'ensemble sur le carter de turbine. On notera que les deux crochets sont disposés suivant des rayons distincts relativement à l'axe longitudinal X-X'. La zone aval 40a de l'entretoise qui comporte la bride aval 36 est plus particulièrement disposée en porte-à-faux radialement vers l'intérieur (en direction de l'axe X-X') à partir du crochet aval 31b.

De manière générale, le diffuseur d'air 34 représenté sur les figures 1, 2 et 4 s'étend de manière circonférentielle autour de l'axe longitudinal X-X' sur 360° et est sectorisé de manière à correspondre à chaque secteur angulaire d'ensemble d'anneau-entretoise. Le diffuseur d'air 34 est destiné à diffuser de l'air de refroidissement sur la pluralité des secteurs angulaires d'anneau 16 et, plus particulièrement, sur la face externe 18b de chacun d'eux (fig. 1). Le diffuseur d'air 34 est aménagé entre chaque secteur angulaire d'entretoise 31 et chaque secteur angulaire d'anneau 16. Il est plus particulièrement disposé en regard de chaque secteur angulaire d'anneau et radialement à l'extérieur de celui-ci relativement à l'axe X-X'.

Dans le mode de réalisation décrit, le diffuseur d'air 34 est aménagé dans un espace interne qui est délimité, d'une part, par chaque secteur angulaire d'entretoise, notamment par la bride aval 36 et la partie d'entreoise 40 et, d'autre part, par chaque secteur angulaire d'anneau 16. Comme représenté sur les figures 1, 2 et 4, le diffuseur d'air 34 a ainsi une forme générale adaptée pour être introduite dans l'espace interne précité, par exemple une forme générale triangulaire. On notera que les formes respectives de la partie 40 d'entretoise avec la bride aval 36 et du corps du diffuseur peuvent varier conjointement de manière à rester adaptées l'une à l'autre.

Le diffuseur d'air 34 comprend une cavité 34a positionnée autour de la base 18 de chaque secteur angulaire d'anneau 16 qui est alimentée en air de refroidissement prélevé, par exemple, à partir d'un étage du compresseur de la turbomachine qui comprend l'ensemble d'anneau de turbine 10. La cavité 34a est délimitée par une paroi 34b du corps du diffuseur qui est orientée en regard de la face externe 18b du secteur angulaire d'anneau, sensiblement parallèlement à celle-ci et qui est perforée d'une multitude de trous traversants 34c qui débouchent sur la face externe 18b pour distribuer sur celle-ci l'air de refroidissement (fig. 1). Les trous traversants 34c du diffuseur d'air sont configurés de manière suffisamment proches de la face externe 18b parallèle en vis-à-vis à refroidir pour minimiser les gradients de température sur le secteur angulaire d'anneau grâce à cet impact de flux d'air localisé suivant une direction radiale. Une distance trop grande entre les trous 34c et la face externe 18b en vis-à-vis donnerait lieu à un flux d'air plus diffus et donc avec moins d'impact sur la face externe 18b, générant ainsi de plus grands gradients de température et donc une efficacité moindre.

Comme représenté sur la figure 2, le diffuseur d'air 34 comporte également une paroi amont 34d reliée au corps du diffuseur qui renferme la cavité 34a par l'intermédiaire de deux bras structuraux parallèles 34e et 34f (le bras 34f est visible en arrière-plan sur la figure 4) écartés circonférentiellement l'un de l'autre et qui s'étendent axialement. Ces deux bras 34e et 34f sont destinés à venir s'encastrer respectivement dans les évidements axiaux A2 et A1 du secteur d'entretoise de la figure 5. La paroi amont 34d forme une bride amont du diffuseur et est percée d'une pluralité de trous t1-t5 traversant son épaisseur (fig. 2) afin de recevoir différents organes d'assemblage. Cette bride amont 34d est destinée à venir en appui contre la face d'extrémité de l'extrémité ou zone amont 40b de chaque secteur d'entretoise 31.

Comme déjà mentionné, la structure de support d'anneau 14 comprend le flasque amont de reprise d'efforts 32 qui présente une forme de révolution (360°) autour de l'axe longitudinal X-X' représentée partiellement sur la figure 2. De manière générale, le flasque amont 32 réalisé en une seule pièce est agencé de manière à être simultanément, d'une part, en contact direct avec la patte amont 22 (et en appui sur celle-ci) de chaque secteur angulaire d'anneau 16 et, d'autre part, fixé à l'extrémité amont 40b de chaque secteur angulaire d'entretoise (cette extrémité 40b est située radialement de manière extérieure à la patte amont 22 relativement à l'axe longitudinal X-X' et dans le prolongement radial de celle-ci). Cet agencement permet de maintenir en position axiale (suivant la direction D_{A}) la pluralité de secteurs angulaires d'anneau 16.

Plus particulièrement, le flasque amont de reprise d'efforts 32 s'étend radialement relativement à l'axe longitudinal X-X' sous la forme de deux parties de flasque (formant une seule et même pièce) qui s'étendent en éloignement de cet axe : une première partie de flasque 32a radialement interne (relativement à l'axe X-X') suivie d'une deuxième partie de flasque 32b radialement externe (relativement à l'axe X-X'). La première partie de flasque 32a interne est épaissie axialement (suivant la direction D_{A}) par rapport à la deuxième partie de flasque 32b externe disposée en vis-à-vis de l'extrémité ou zone amont 40b de l'entretoise. On notera que la deuxième partie de flasque 32b est épaissie axialement par rapport à la bride aval 36, relativement souple, de l'entretoise, conférant ainsi, de manière générale, à l'ensemble du flasque amont de reprise d'efforts 32 une rigidité relative importante.

Plus particulièrement, la paroi amont 34d du diffuseur d'air 34 est interposée entre le flasque amont 32 et l'entretoise 30 et fixée entre ces deux pièces, bloquant ainsi axialement le diffuseur. Plus particulièrement, la paroi amont 34d est pincée entre, d'une part, la deuxième partie de flasque 32b et une portion supérieure de la première partie de flasque 32a et, d'autre part, l'extrémité amont 40b de l'entretoise. La paroi amont 34d est également disposée dans le prolongement radial de la patte amont 22 à l'extérieur de celle-ci relativement à l'axe X-X'.

Comme représenté sur les figures 1 et 4, dans l'assemblage de la structure de support d'anneau 14, la première partie de flasque 32a est disposée de manière à être en contact avec la patte amont 22 (et également en partie avec une portion inférieure de la paroi amont 34d du diffuseur). La deuxième partie de flasque 32b est, quant à elle, disposée de manière à être en contact avec la paroi amont 34d du diffuseur et fixée, avec cette dernière, à l'extrémité amont 40b d'entretoise.

Une pluralité d'organes de bridage/liaison sont répartis circonférentiellement de manière à relier la deuxième partie de flasque 32b (percée de manière circonférentielle d'une pluralité de trous traversants 32c), la paroi amont 34d du diffuseur et l'extrémité amont 40b d'entretoise de manière à réaliser un pré-serrage du flasque amont sur l'entretoise. Ces organes référencés 42 sur les figures 1, 2 et 4 sont par exemple des vis de bridage 42 munies d'écrous 44 et sont engagées successivement dans les trous traversants 32c, dans les orifices t2 et t5 de la bride amont 34d du diffuseur et dans les orifices o2 et o3 du secteur d'entretoise 31 pour déboucher dans les cavités C2 et C3.

Une pluralité d'organes d'assemblage réalisés sous la forme de pions axiaux 46 (fig. 1) sont engagés successivement à travers une pluralité d'autres trous traversants 32d de la deuxième partie de flasque 32b (fig. 1), les trous t3 de la bride amont 34d du diffuseur (fig. 2) et les orifices o1 du secteur angulaire d'entretoise qui débouchent au fond d'un logement (fig. 5). Ces pions 46 servent au positionnement tangentiel précis du diffuseur 34 par rapport au flasque amont 32 afin que ce dernier soit positionné au mieux vis-à-vis des secteurs angulaires d'anneau et vis-à-vis des deux perçages disposés de part et d'autre du trou 32d (fig. 2). Ces deux perçages sont ici des perçages calibrés d'alimentation en air du diffuseur.

On notera que le flasque amont de reprise d'efforts 32 comporte sur sa face interne (fig. 2) orientée face à la bride amont 34d du diffuseur et à la patte amont 22 de chaque secteur angulaire d'anneau des rebords ou nervures disjoints r1, r2 qui s'étendent sur des portions d'arc (secteurs angulaires) et qui sont destinés à être insérés entre le bord inférieur de la bride amont 34d et le bord supérieur de la patte amont 22. Ces rebords viennent compléter l'action du pion 46 en maintenant radialement le diffuseur pour que ce dernier soit à une distance optimale du secteur angulaire d'anneau concerné et ne vienne pas en contact avec lui.

Comme illustré sur les figures 2 et 4, des organes de maintien amont relient chacun la patte amont 22 de chaque secteur angulaire d'anneau 16 et le flasque amont de reprise d'efforts 32 et viennent, par une extrémité, s'engager dans un logement (trou borgne) de la première partie de flasque 32a (fig. 4). Ces organes sont des organes de liaison 48 réalisés par exemple sous la forme de pions axiaux 38.

On notera que la configuration aval amincie des secteurs d'entretoise par rapport à la partie d'entretoise 40 dont l'épaisseur s'accroît vers l'aval (la partie d'entretoise 40 peut adopter une configuration différente sans que cela n'affecte le principe décrit ici), permet de limiter la transmission, aux secteurs angulaires d'anneau 16, des efforts exercés sur le flasque amont 32 par le distributeur haute-pression (non représenté) en contact avec ce flasque. L'amincissement aval des secteurs d'entretoise est réalisé ici sous la forme d'une patte amincie 36 qui est ainsi dotée d'une certaine souplesse axiale (élasticité) relativement au reste du secteur d'entretoise.

Par ailleurs, le flasque amont de reprise d'efforts 32 présente une raideur/rigidité importante en raison, d'une part, de la plus grande épaisseur de sa première partie de flasque 32a en contact avec les secteurs angulaires d'anneau 16 par rapport à sa deuxième partie de flasque 32b et, d'autre part, de la plus grande rigidité du flasque amont 32, notamment de sa deuxième partie de flasque 32b, par rapport à la zone aval des secteurs d'entretoise. Ainsi, les efforts exercés sur le flasque amont 32 par le distributeur haute-pression sont principalement repris par cette pièce et leur transmission aux secteurs angulaires d'anneau 16 est limitée.

Le flasque amont de reprise d'efforts 32 est formé d'une seule pièce de révolution, ce qui permet d'améliorer la gestion des fuites axiales entre la cavité circulaire située au-dessus du distributeur haute-pression et la cavité de l'anneau. De plus, ce flasque monobloc assure également un meilleur positionnement des secteurs angulaires d'anneau qu'un flasque sectorisé.

En outre, le maintien en position axiale des secteurs angulaires d'anneau est assuré par le pré-serrage introduit par les organes de bridage/liaison répartis circonférentiellement entre le flasque amont de reprise d'efforts 32 (notamment la deuxième partie de flasque 32b) et l'extrémité amont 40b de l'entretoise.

On notera qu'il n'y a pas d'autre pièce dans l'assemblage de la structure de support d'anneau que le flasque amont 32, le diffuseur 34 et l'entretoise 30, en particulier dans la zone amont de cet assemblage où le flasque est agencé directement et simultanément contre le diffuseur (lui-même en appui contre la zone amont 40b de l'entretoise) et la patte amont des secteurs d'anneau.

Bien que la présente description se réfère à des exemples de réalisation spécifiques, des modifications peuvent être apportées à ces exemples sans sortir de la portée générale de l'invention telle que définie par les revendications. En outre, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

## Revendications

1. Ensemble d'anneau de turbine (10) s'étendant autour d'un axe longitudinal (X-X') suivant lequel un fluide est destiné à s'écouler d'amont en aval, l'ensemble d'anneau de turbine comprenant:
- une pluralité de secteurs angulaires d'anneau (16) en matériau composite à matrice céramique disposés circonférentiellement de manière à former un anneau de turbine, chaque secteur angulaire d'anneau (16) comprenant une base (18) à partir de laquelle s'étendent radialement, en éloignement de l'axe longitudinal, une patte amont (22) et une patte aval (24) espacées axialement l'une de l'autre,
- une structure de support d'anneau (14) qui comprend :
une entretoise (30) s'étendant circonférentiellement autour de la pluralité de secteurs angulaires d'anneau (16) et comportant une ou plusieurs brides aval (36) de manière à ce que la patte aval (24) de chaque secteur angulaire d'anneau soit maintenue contre la bride aval ou une des brides aval (36) de l'entretoise,
un flasque amont de reprise d'efforts (32) s'étendant circonférentiellement autour de l'axe longitudinal (X-X') et radialement relativement à cet axe de manière à être simultanément, d'une part, en appui contre la patte amont (22) de chaque secteur angulaire d'anneau et, d'autre part, fixé à une zone amont (40b) de l'entretoise (30) qui est disposée radialement au droit de la patte amont (22) de chaque secteur angulaire d'anneau (16), de manière extérieure à la patte amont (22) relativement à l'axe longitudinal, **caractérisé en ce que** l'ensemble d'anneau de turbine comprend en outre,
un diffuseur d'air (34) aménagé entre l'entretoise (30) et chaque secteur angulaire d'anneau (16), le diffuseur d'air (34) comportant une paroi amont (34d) fixée entre le flasque amont de reprise d'efforts (32) et la zone amont (40b) de l'entretoise (30).

2. Ensemble d'anneau de turbine selon la revendication 1, dans lequel une pluralité d'organes de bridage (42, 44) sont répartis circonférentiellement entre le flasque amont de reprise d'efforts (32) et la zone amont (40b) de l'entretoise (30) de manière à réaliser un pré-serrage du flasque amont de reprise d'efforts sur la zone amont de l'entretoise (30).

3. Ensemble d'anneau de turbine selon la revendication 1 ou 2, dans lequel des organes de maintien amont (48) relient la patte amont (22) de chaque secteur angulaire d'anneau (16) et le flasque amont de reprise d'efforts (32).

4. Ensemble d'anneau de turbine selon l'une des revendications précédentes, dans lequel des organes de maintien aval (38) relient la patte aval (24) de chaque secteur angulaire d'anneau (16) et la ou les brides aval (36) de l'entretoise (30).

5. Ensemble d'anneau de turbine selon l'une des revendications précédentes, dans lequel le flasque amont de reprise d'efforts (32) comprend une première partie de flasque (32a) qui est radialement interne et une deuxième partie de flasque (32b) qui est radialement externe et s'étend radialement en éloignement de la première partie de flasque (32a) relativement à l'axe longitudinal, la première partie de flasque (32a) étant en contact avec la patte amont (22) de chaque secteur angulaire d'anneau et étant épaissie axialement par rapport à la deuxième partie de flasque (32b) qui est fixée à la zone amont (40b) de l'entretoise (30).

6. Ensemble d'anneau de turbine selon la revendication 5, dans lequel la deuxième partie de flasque (32b) est épaissie axialement par rapport à la ou à chaque bride aval (36) de l'entretoise (30).

7. Ensemble d'anneau de turbine selon l'une des revendications précédentes, dans lequel l'entretoise comprend un crochet amont (31a) et un crochet aval (31b) espacés axialement l'un de l'autre et ayant chacun une même orientation dirigée vers l'amont ou vers l'aval, chaque crochet étant destiné à coopérer avec un crochet correspondant d'orientation inverse d'un carter de turbine pour l'accrochage de l'entretoise sur ce dernier.

8. Ensemble d'anneau de turbine selon la revendication 7, dans lequel les crochets amont (31a) et aval (31b) de l'entretoise (30) sont orientés vers l'aval.

9. Ensemble d'anneau de turbine selon la revendication 7 ou 8, dans lequel l'entretoise (30) comprend une zone aval (40a) comportant la ou les brides aval (36) et qui est disposée en porte-à-faux radialement vers l'intérieur en direction de l'axe longitudinal à partir du crochet aval (31b) de l'entretoise (30).

10. Ensemble d'anneau de turbine selon l'une des revendications précédentes, dans lequel la ou les brides aval (36) de l'entretoise (30) s'étendent radialement à partir d'une base (36a) de la ou des brides aval en direction de la pluralité de secteurs angulaires d'anneau (16) et l'entretoise (30) comporte une partie (40) qui s'étend axialement de la base (36a) de la ou des brides aval vers la zone amont (40b) de l'entretoise (30) avec une dimension radiale qui augmente en direction de cette zone amont, de manière à conférer à cette partie (40) de l'entretoise (30) une forme générale triangulaire en section axiale.

11. Ensemble d'anneau de turbine selon la revendication 10, dans lequel la partie d'entretoise de forme générale triangulaire (40) comprend plusieurs tronçons successifs (C1-C3) disposés circonférentiellement de manière adjacente l'un par rapport à l'autre.

12. Ensemble d'anneau de turbine selon l'une des revendications précédentes, dans lequel le diffuseur d'air (34) comporte une paroi (34b) disposée en vis-à-vis du secteur angulaire et percée d'une pluralité de trous traversants (34c) pour le passage d'air de refroidissement et pour la distribution d'un flux d'air de refroidissement sur le secteur angulaire d'anneau (16) en vis-à-vis.

13. Ensemble d'anneau de turbine selon la revendication 12, dans lequel la paroi (34b) du diffuseur percée d'une pluralité de trous traversants (34c) est disposée à une distance suffisamment proche du secteur angulaire d'anneau (16) en vis-à-vis, de manière à minimiser le gradient de température sur le secteur angulaire en vis-à-vis .

14. Ensemble d'anneau de turbine selon l'une des revendications 1 à 13, dans lequel le diffuseur d'air (34) est aménagé dans un espace interne qui est délimité, d'une part, par l'entretoise (30) et, d'autre part, par chaque secteur angulaire d'anneau (16), le diffuseur d'air présentant une forme générale, notamment triangulaire, adaptée pour être introduite dans l'espace interne.

15. Turbomachine comprenant un ensemble d'anneau de turbine selon l'une des revendications 1 à 14.

## Patentansprüche

1. Turbinenringanordnung (10), die sich um eine Längsachse (X-X') herum erstreckt, entlang welcher ein Fluid von stromaufwärts nach stromabwärts strömen soll, wobei die Turbinenringanordnung umfasst:
- mehrere Ring-Winkelsektoren (16) aus Verbundmaterial mit keramischer Matrix, die umlaufend auf solche Weise angeordnet sind, dass sie einen Turbinenring bilden, wobei jeder Ring-Winkelsektor (16) eine Basis (18) umfasst, von welcher ausgehend sich in Verlängerung der Längsachse eine stromaufwärtige Lasche (22) und eine stromabwärtige Lasche (24) erstrecken, die axial voneinander beabstandet sind,
- eine Ringträgerstruktur (14), die umfasst:
einen Abstandshalter (30), der sich auf solche Weise in Umfangsrichtung um die mehreren Ring-Winkelsektoren (16) herum erstreckt und einen oder mehrere stromabwärtige Flansche (36) beinhaltet, dass die stromabwärtige Lasche (24) eines jeden Ring-Winkelsektors gegen den stromabwärtigen Flansch oder einen der stromabwärtigen Flansche (36) des Abstandshalters gehalten wird,
einen stromaufwärtigen Kraftaufnahme-Flanschring (32), der sich in Umfangsrichtung um die Längsachse (X-X') und radial relativ zu dieser Achse auf solche Weise erstreckt, dass er gleichzeitig einerseits an der stromaufwärtigen Lasche (22) eines jeden Ring-Winkelsektors anliegt und andererseits an einer stromaufwärtigen Zone (40b) des Abstandshalters (30) befestigt ist, die radial rechts von der stromaufwärtigen Lasche (22) eines jeden Ring-Winkelsektors (16) auf solche Weise angeordnet ist,
dass sie sich relativ zur Längsachse außerhalb der stromaufwärtigen Lasche (22) befindet, **dadurch gekennzeichnet, dass** die Turbinenringanordnung ferner einen Luftdiffusor (34) umfasst, der zwischen dem Abstandshalter (30) und jedem Ring-Winkelsektor (16) eingebracht ist, wobei der Luftdiffusor (34) eine stromaufwärtige Wand (34d) beinhaltet, die zwischen dem stromaufwärtigen Kraftaufnahme-Flanschring (32) und der stromaufwärtigen Zone (40b) des Abstandshalters (30) befestigt ist.

2. Turbinenringanordnung nach Anspruch 1, wobei mehrere Flanschverbindungselemente (42, 44) in Umfangsrichtung zwischen dem stromaufwärtigen Kraftaufnahme-Flanschring (32) und der stromaufwärtigen Zone (40b) des Abstandshalters (30) auf solche Weise verteilt sind, dass sie eine Vorspannung des stromaufwärtigen Kraftaufnahme-Flanschrings gegen die stromaufwärtige Zone des Abstandshalters (30) verwirklichen.

3. Turbinenringanordnung nach Anspruch 1 oder 2, wobei stromaufwärtige Halteelemente (48) die stromaufwärtige Lasche (22) eines jeden Ring-Winkelsektors (16) und den stromaufwärtigen Kraftaufnahme-Flanschring (32) verbinden.

4. Turbinenringanordnung nach einem der vorhergehenden Ansprüche, wobei stromabwärtige Halteelemente (38) die stromabwärtige Lasche (24) eines jeden Ring-Winkelsektors (16) und den oder die stromabwärtigen Flansche (36) des Abstandshalters (30) verbinden.

5. Turbinenringanordnung nach einem der vorhergehenden Ansprüche, wobei der stromaufwärtige Kraftaufnahme-Flanschring (32) einen ersten Flanschabschnitt (32a), der radial innen liegt, und einen zweiten Flanschabschnitt (32b) umfasst, der radial außen liegt und sich radial in Verlängerung des ersten Flanschabschnitts (32a) relativ zu der Längsachse erstreckt, wobei der erste Flanschabschnitt (32a) in Kontakt mit der stromaufwärtigen Lasche (22) eines jeden Ring-Winkelsektors steht und in Bezug auf den zweiten Flanschabschnitt (32b), der an der stromaufwärtigen Zone (40b) des Abstandshalters (30) befestigt ist, axial verdickt ist.

6. Turbinenringanordnung nach Anspruch 5, wobei der zweite Flanschabschnitt (32b) in Bezug auf den oder jeden stromabwärtigen Flansch (36) des Abstandshalters (30) axial verdickt ist.

7. Turbinenringanordnung nach einem der vorhergehenden Ansprüche, wobei der Abstandshalter einen stromaufwärtigen Haken (31a) und einen stromabwärtigen Haken (31b) umfasst, die axial voneinander beabstandet sind und jeweils eine selbe stromaufwärts oder stromabwärts ausgerichtete Orientierung aufweisen, wobei jeder Haken dazu bestimmt ist, mit einem entsprechenden Haken eines Turbinengehäuses mit umgekehrter Orientierung für die Verhakung des Abstandshalters an demselben zusammenzuwirken.

8. Turbinenringanordnung nach Anspruch 7, wobei die stromaufwärtigen (31a) und stromabwärtigen Haken (31b) des Abstandshalters (30) stromabwärts orientiert sind.

9. Turbinenringanordnung nach Anspruch 7 oder 8, wobei der Abstandshalter (30) eine stromabwärtige Zone (40a) umfasst, die den oder die stromabwärtigen Flansche (36) beinhaltet und die ausgehend von dem stromabwärtigen Haken (31b) des Abstandshalters (30) freitragend radial nach innen in Richtung der Längsachse angeordnet ist.

10. Turbinenringanordnung nach einem der vorhergehenden Ansprüche, wobei der oder die stromabwärtigen Flansche (36) des Abstandshalters (30) sich ausgehend von einer Basis (36a) des oder der stromabwärtigen Flansche radial in Richtung der mehreren Ring-Winkelsektoren (16) erstrecken, und der Abstandshalter (30) einen Abschnitt (40) beinhaltet, der sich axial von der Basis (36a) des oder der stromabwärtigen Flansche zu der stromaufwärtigen Zone (40b) des Abstandshalters (30) hin mit einer radialen Dimension erstreckt, die in Richtung dieser stromaufwärtigen Zone auf solche Weise zunimmt, dass diesem Abschnitt (40) des Abstandshalters (30) eine im axialen Schnitt allgemein dreieckige Form verliehen wird.

11. Turbinenringanordnung nach Anspruch 10, wobei der Abschnitt des Abstandshalters mit allgemein dreieckiger Form (40) mehrere aufeinanderfolgende Teilstücke (C1-C3) umfasst, die in Umfangsrichtung auf zueinander benachbarte Weise angeordnet sind.

12. Turbinenringanordnung nach einem der vorhergehenden Ansprüche, wobei der Luftdiffusor (34) eine Wand (34b) beinhaltet, die dem Winkelsektor gegenüber angeordnet ist und von mehreren Durchgangslöchern (34c) für den Durchgang von Kühlluft und für die Verteilung eines Kühlluftstroms auf dem gegenüberliegenden Ring-Winkelsektor (16) durchbrochen wird.

13. Turbinenringanordnung nach Anspruch 12, wobei die Wand (34b) des Diffusors, die von mehreren Durchgangslöchern (34c) durchbrochen wird, in einem Abstand ausreichend nahe an dem gegenüberliegenden Ring-Winkelsektor (16) auf solche Weise angeordnet ist, dass der Temperaturgradient auf dem gegenüberliegenden Winkelsektor minimiert wird.

14. Turbinenringanordnung nach einem der Ansprüche 1 bis 13, wobei der Luftdiffusor (34) in einen Innenraum eingebracht ist, der einerseits durch den Abstandshalter (30) und andererseits durch jeden Ring-Winkelsektor (16) begrenzt wird, wobei der Luftdiffusor eine allgemeine, insbesondere dreieckige, Form aufweist, die dazu geeignet ist, in den Innenraum eingeführt zu werden.

15. Turbomaschine, umfassend eine Turbinenringanordnung nach einem der Ansprüche 1 bis 14.

## Claims

1. A turbine ring assembly (10) extending around a longitudinal axis (X-X') along which a fluid is intended to flow, from upstream to downstream, the turbine ring assembly comprising:
- a plurality of ring angular sectors (16) made of ceramic matrix composite material arranged circumferentially in such a way as to form a turbine ring, each ring angular sector (16) comprising a base (18), from which an upstream leg (22) and a downstream leg (24) extend radially, in extension of the longitudinal axis, axially spaced apart from one another,
- a ring support structure (14) which comprises:
a spacer (30) extending circumferentially around the plurality of ring angular sectors (16) and comprising one or more downstream flanges (36) in such a way that the downstream leg (24) of each ring angular sector is held against the downstream flange or one of the downstream flanges (36) of the spacer,
an upstream force-absorbing plate (32) extending circumferentially around the longitudinal axis (X-X') and radially relative to this axis, in such a way as to be simultaneously, on the one hand, in abutment against the upstream leg (22) of each ring angular sector and, on the other hand, attached to an upstream area (40b) of the spacer (30) which is arranged radially in line with the upstream leg (22) of each ring angular sector (16), externally to the upstream leg (22) relative to the longitudinal axis, **characterized in that** the turbine ring assembly further comprises, an air diffuser (34) arranged between the spacer (30) and each ring angular sector (16), the air diffuser (34) comprising an upstream wall (34d) attached between the upstream force-absorbing plate (32) and the upstream area (40b) of the spacer (30).

2. The turbine ring assembly according to claim 1, wherein a plurality of flanging members (42, 44) are distributed circumferentially between the upstream force-absorbing plate (32) and the upstream area (40b) of the spacer (30) in such a way as to produce a pre-clamping of the upstream force-absorbing plate on the upstream area of the spacer (30).

3. The turbine ring assembly according to claim 1 or 2, wherein upstream holding members (48) connect the upstream leg (22) of each ring angular sector (16) and the upstream force-absorbing plate (32).

4. The turbine ring assembly according to one of the preceding claims, wherein downstream holding members (38) connect the downstream leg (24) of each ring angular sector (16) and the downstream flange or flanges (36) of the spacer (30).

5. The turbine ring assembly according to one of the preceding claims, wherein the upstream force-absorbing plate (32) comprises a first plate part (32a) which is radially inner and a second plate part (32b) which is radially outer and extends radially in extension of the first plate part (32a) relative to the longitudinal axis, the first plate part (32a) being in contact with the upstream leg (22) of each ring angular sector and axially thickened with respect to the second plate part (32b) which is attached to the upstream area (40b) of the spacer (30).

6. The turbine ring assembly according to claim 5, wherein the second plate part (32b) is axially thickened with respect to the or each downstream flange (36) of the spacer (30).

7. The turbine ring assembly according to one of the preceding claims, wherein the spacer comprises an upstream hook (31a) and a downstream hook (31b) axially spaced apart from one another and each having the same orientation directed upstream or downstream, each hook being intended to cooperate with a corresponding hook of opposite orientation of a turbine casing for hooking the spacer thereto.

8. The turbine ring assembly according to claim 7, wherein the upstream (31a) and downstream (31b) hooks of the spacer (30) are oriented downstream.

9. The turbine ring assembly according to claim 7 or 8, wherein the spacer (30) comprises a downstream area (40a) comprising the downstream flange or flanges (36) and which is cantilevered radially inwards in the direction of the longitudinal axis from the downstream hook (31b) of the spacer (30).

10. The turbine ring assembly according to one of the preceding claims, wherein the downstream flange or flanges (36) of the spacer (30) extend radially from a base (36a) of the downstream flange or flanges towards the plurality of ring angular sectors (16) and the spacer (30) comprises a part (40) which extends axially from the base (36a) of the downstream flange or flanges to the upstream area (40b) of the spacer (30) with a radial dimension which increases in the direction towards this upstream area, in such a way as to give this part (40) of the spacer (30) a generally triangular shape in axial cross-section.

11. The turbine ring assembly according to claim 10, wherein the spacer part of generally triangular-shape (40) comprises a plurality of successive segments (C1-C3) arranged circumferentially adjacent to one another.

12. The turbine ring assembly according to one of the preceding claims, wherein the air diffuser (34) comprises a wall (34b) arranged facing the angular sector and pierced by a plurality of through-holes (34c) for the passage of cooling air and for the distribution of a cooling air flow on the facing ring angular sector (16).

13. The turbine ring assembly according to claim 12, wherein the wall (34b) of the diffuser pierced by a plurality of through-holes (34c) is arranged at a distance sufficiently close to the facing ring angular sector (16), so as to minimise the temperature gradient over the facing angular sector.

14. The turbine ring assembly according to one of claims 1 to 13, wherein the air diffuser (34) is arranged in an inner space which is delimited, on the one hand, by the spacer (30) and, on the other hand, by each ring angular sector (16), the air diffuser having a general shape, especially triangular, suitable for being introduced into the inner space.

15. A turbomachine comprising a turbine ring assembly according to one of claims 1 to 14.
